Europäisches Patentamt

European Patent Office

Office européen des brevets

(11) Publication number: **0 286 292**
**A2**

# EUROPEAN PATENT APPLICATION

(21) Application number: 88302756.7

(22) Date of filing: 28.03.88

(51) Int. Cl.⁴: **B05B 5/04 , F16C 32/06**

(30) Priority: 06.04.87 US 34359

(43) Date of publication of application:
**12.10.88 Bulletin 88/41**

(84) Designated Contracting States:
**BE DE FR GB IT**

(71) Applicant: **THE DEVILBISS COMPANY (a Delaware Corp.)**
**PO Box 913 300 Phillips Avenue**
**Toledo Ohio 43692(US)**

(72) Inventor: **Weinstein, Richard**
**2439 Middlesex Drive**
**Toledo Ohio 43606(US)**

(74) Representative: **Freed, Arthur Woolf et al**
**MARKS & CLERK 57-60 Lincoln's Inn Fields**
**London WC2A 3LS(GB)**

(54) Protective system for a device rotatably supported by air bearings.

(57) A protective air control system for an air turbine (73) motor having air bearings (72) ensures pressurized air is supplied to the air bearings (72) whenever the air turbine (73) is being driven. In one embodiment, a sensing device (81) monitors the air pressure supplied to the air bearings, and is operative to open a valve (78) for supplying air to the turbine (73) only when the bearing air pressure exceeds a predetermined amount. In another embodiment, a check valve (88) is mounted to divert a portion of the turbine air to the bearings (72) when the bearing air pressure is below the turbine air pressure. The protective system can be used with an electrostatic rotary atomizer coater (10).

EP 0 286 292 A2

FIG. 3

# PROTECTIVE SYSTEM FOR A DEVICE ROTATABLY SUPPORTED BY AIR BEARINGS

## BACKGROUND OF THE INVENTION

The present invention relates generally to a rotating device which is rotatably supported by air bearings and, in particular, to an air turbine motor wherein the driven shaft is rotatably supported by air bearings.

Air turbine motors are typically utilized in applications wherein it is desirable to rotate an object at relatively high speeds. An ideal application for an air turbine motor is in a rotary atomizer coater of the type disclosed in U.S. Patent No. 4,555,058 issued to Weinstein et al. Such a device has been found to be particularly useful in electrostatic coating operations. The rotary atomizer disclosed in the Weinstein et al. patent includes a disk or bell mounted on one end of a shaft rotatably driven by an air powered turbine motor. A coating fluid is delivered to the inner surface of the disk or bell and is thrown off in small particles through centrifugal force. In such applications, the disk or bell is rotated at relatively high speeds, typically between 10,000 and 40,000 rpms.

In the above-mentioned patent to Weinstein et al., the shaft of the air turbine motor is rotatably supported by a pair of spaced apart conventional bearing assemblies. Due to the high speeds at which the shaft rotates and the desire to minimize the rotational frictional drag, it has been found desirable to utilize air bearings to rotatably support the shaft. The air bearings typically include a pair of spaced apart sleeves having an inner bore slightly larger than the outer diameter of the rotating shaft. The sleeves are provided with a plurality of circumferentially spaced feed apertures at each end thereof. When pressurized air is supplied to the air turbine motor to rotate the shaft, pressurized air is also supplied to the air bearings through the feed apertures to provide a cushion of air between the outer surface of the shaft and the inner surfaces of the air bearing sleeves. Generally, the air bearings are connected to receive pressurized air at a predetermined constant pressure, while the air turbine motor is connected to receive pressurized air from a variable pressure source which controls the speed of the rotating shaft by varying the supply pressure. Normally, the predetermined constant pressure supplied to the air bearings is greater than the maximum pressure used to drive the air turbine.

## SUMMARY OF THE INVENTION

The present invention concerns a protective air control system for an air turbine motor having a driven shaft rotatably supported by air bearings. In order to prevent excessive wear of the air bearing sleeves and the rotating shaft, it is extremely important that pressurized air continually be supplied to the air bearings during the operation of the motor. However, since the bearings and turbine typically receive air through separate conduits and/or from separate sources, it is possible to operate prior art air turbine motors without supplying air to the air bearings. In the system of the present invention, the air turbine motor is provided with a protective means to ensure pressurized air is supplied to the air bearings whenever the air turbine is being driven.

In one embodiment of the invention, the protective means is operable to prevent operation of the air turbine motor unless a predetermined minimum pressure is supplied to the bearings. In another embodiment, if the pressure supplied to the air bearings is less than the air pressure to the turbine, a portion of the turbine air is diverted to the air bearings.

In the preferred embodiment of the invention, the protective means is located in a manifold assembly releasably attached to the air motor. The manifold is provided with a first conduit or passageway for supplying turbine air, and a second passageway for supplying bearing air. A third passageway interconnects the first and second passageways. A spring biased piston means is located in the third passageway, and includes plug means adapted to block the first passageway and cut off turbine air when the bearing air pressure is below the predetermined minimum pressure. Alternatively, the third passageway can be used to mount a check valve means to enable turbine air to be partially diverted to the bearings when the bearing air pressure is below the turbine air pressure.

The above, as well as other advantages of the present invention, will become readily apparent to one skilled in the art when the following detailed description of the invention is read in conjunction with the attached drawings.

## BRIEF DESCRIPTION OF THE DRAWINGS

Fig. 1 is an exploded perspective view of a rotary atomizer which includes an air turbine motor having air bearings for use with the protective air control system of the present invention;

Fig. 2 is a fragmentary sectional view which illustrates an air turbine motor which can be utilized to drive the rotary atomizer of Fig. 1;

Fig. 3 is a block diagram which - schematically illustrates one embodiment of a protective air control system according to the present invention;

Fig. 4 is a block diagram illustrating a second embodiment of a protective air control system according to the present invention;

Fig. 5 is a front elevational view of the manifold assembly of Fig. 1 which can incorporate a protective air control system of the type illustrated in Fig. 3;

Fig. 6 is a sectional view taken substantially along the line 6-6 of Fig. 5, and illustrated a spring-biased piston which normally blocks air to the air turbine in the event bearing air pressure is below a predetermined amount; and

Fig. 7 is a sectional view, similar to Fig. 6, but illustrates the embodiment of Fig. 4 incorporated within the manifold assembly of Fig. 1.

## DETAILED DESCRIPTION OF THE PREFERRED EMBODIMENT

It should be noted at the outset of this description that, while the present invention is described for use with an air turbine motor which is utilized in a rotary atomizer coater, the protective system of the present invention can also be utilized in other applications, as will be discussed below.

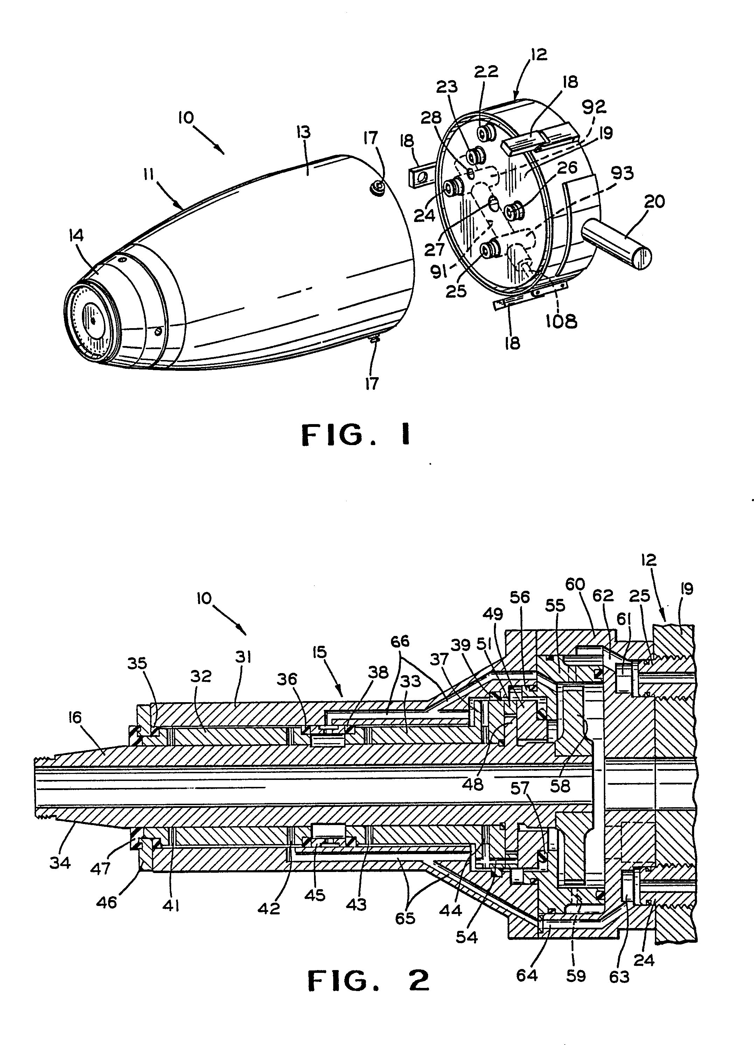

Prior to discussing the protective system of the present invention and the various embodiments thereof, one type of rotary atomizer coater with which the present invention can be used will be discussed. Referring to Figs. 1 and 2, a rotary atomizer coater is generally indicated by reference numeral 10. The coater 10 includes a front housing assembly 11 which is adapted to be releasably connected to a manifold assembly 12. The housing assembly 11 includes an outer casing or shroud 13 having an atomizer bell 14 rotatably supported at the front end thereof. The shroud 13 surrounds an air motor 15 (shown in Fig. 2) which includes a hollow shaft 16 extending from one end thereof for rotatably supporting the atomizer bell 14. In Fig. 2, the rotary atomizer 10 is shown without the shroud 13 surrounding the motor 15 and without the atomizer bell 14 connected to the outer end of the shaft 16.

The housing assembly 11 is releasably mounted to the manifold assembly 12 by a plurality of circumferentially spaced latch assemblies having a first portion 17 mounted on the rear end of the shroud and a second portion 18 mounted on the manifold assembly 12. The manifold assembly 12 includes a generally cylindrical body 19 having a radially outwardly extending stud member 20 for attachment to a device for positioning the rotary atomizer 10 at a work station such as an industrial robot or a reciprocating mechanism (not shown).

The manifold body 19 provides a means for supplying the various coating fluids to the atomizer bell 14, while also providing a means for supplying the necessary pressurized air supply and return lines for operating the air turbine motor and the air bearings, and the shaping air for delivering the fluid. For example, in Fig. 1, a plurality of fittings extend from the surface of the manifold body which faces the larger diameter end of the shroud 13. These fittings can include a shaping air fitting 22, an exhaust air fitting 23, a bearing air fitting 24, a turbine air fitting 25, and a brake air fitting 26. The coating fluids can be delivered through a central aperture 27 formed in the manifold body 19. Also formed in the manifold body 19 is a speed monitor access port 28 utilized to carry wires connected to a speed sensor (not shown) which monitors the air turbine wheel.

In Fig. 2, the manifold assembly 12 is shown attached to the one end of the motor 15. The sectional view of Fig. 2 is taken to illustrate the air supply passageways for supplying the turbine air to the air turbine motor through the fitting 25 and the bearing air to the associated air bearings through the fitting 24. The hollow shaft 16 is rotatably supported within a motor housing 31 by a pair of spaced-apart air bearing sleeves 32 and 33. The one end of the shaft 16 extends outwardly from the motor housing 31 and is provided with a tapered mounting surface 34 for receiving the atomizer bell 14.

The air bearing sleeve 32 is provided with reduced diameter end portions for receiving O-rings 35 and 36. The O-rings 35 and 36 are compressed between the respective end portions of the sleeve and the inner wall of the motor housing 31 to maintain the outer wall of the sleeve 32 in spaced apart relationship with the inner wall of the motor housing. Thus, the bearing sleeve 32 is resiliently supported relative to the motor housing. The other bearing sleeve 33, while having a large diameter end portion 37, can be resiliently supported in a similar manner by means of O-rings 38 and 39.

The air bearing sleeves 32 and 33 are shown in Fig. 2 as having inner annular surfaces in contact with the outer surface of the shaft 16. Actually, the outer diameter of the shaft is slightly smaller than the inner diameter of the bearing sleeves such that there is a desired clearance distance therebetween. When operating, this clearance space is uniformly filled with pressurized air such that there is no appreciable contact between shaft and the air bearing sleeves, and the shaft is rotating on a "cushion" of air.

In order to uniformly distribute the pressurized air between the sleeve 32 and the shaft 16, the sleeve is provided with a plurality of uniformly and circumferentially spaced apart feed ports 41 at the one thereof, and a plurality of similarly spaced feed ports 42 at the opposite end. Each of the feed ports 41 and 42 is provided with a plurality of individual passageways to precisely control the air flow therethrough. The other bearing sleeve 33 is provided with similarly positioned feed ports 43 and 44.

The bearing sleeves 32 and 33 are maintained in spaced apart relationship by means of an annular spacer 45 which is positioned between and contacts the C-rings 36 and 38. A front cover 46 is suitably attached to the front face of the motor housing 31 and engages the O-ring 35. Also, an annular seal 47 is carried by the cover 46 and sealingly engages the shaft 16.

The enlarged end 37 of the bearing sleeve 33 is located on one side of an annular ring 48 integrally formed on the shaft 16, while a thrust plate 49 is located on the opposite side of the annular ring 48. An annular spacer 51 surrounds the periphery of the ring and has a width slightly larger than the width of the ring. A feed plate 55 has a reduced diameter portion 56 which is inserted into the rear end of the motor housing 31. An O-ring 57 is positioned between the feed plate 55 and the thrust plate 49 for resiliently supporting the air bearing sleeves 32 and 33 and the thrust plate 49 for limited axial movement within the motor housing 31. Pressurized air can be supplied to the thrust surfaces of the ring 48 through a plurality of axially extending apertures 54 formed in the enlarged end 37 of the bearing sleeve 33.

The one end of the shaft 16 extends through a central aperture in the thrust plate 49, and has an air turbine wheel 58 secured thereon for rotatably driving the shaft. The turbine wheel 58 is positioned within the enlarged end of the feed plate 55, which is provided with a plurality of circumferentially spaced feed ports 59 for supplying pressurized air to the exterior portion of the turbine wheel 58. A housing end cap 60 is positioned over the feed plate 55, and is suitably attached to the rear end face of the motor housing 31.

The end cap 60 is provided with a plurality of openings for receiving the projecting portions of the various fittings mounted on the manifold assembly. For example, the turbine air fitting 25 is sealingly inserted within a cavity 61 which is connected to supply pressurized air to the turbine feed ports 59 through a passageway 62. Similarly, the bearing air fitting 24 is sealingly received within a cavity 63 which is connected to supply pressurized air to the various bearing feed ports through a passageway 64 formed in the end cap 60 and passageways 65 formed in the motor housing 31. The bearing air can be exhausted into the tub turbine wheel cavity through passageway 66, where it is mixed with the turbine air exhaust.

Generally, with the rotary atomizer coater of Figs. 1 and 2, air is supplied to the bearings at a pressure different from the pressure supplied to the turbine. Under normal operating conditions, the bearing air is supplied at a relatively constant pressure, while the turbine air is supplied at a variable pressure to control the turbine speed. Typically, the pressure of the air supplied to the bearings is greater than the maximum pressure supplied to the turbine. While the bearing air and turbine air can be supplied through separate conduits from separate regulated air sources, the bearing air and turbine air can also be supplied from a single source through separate, individually regulated conduits.

The rotary atomizer coater is operated such that bearing air is always supplied whenever turbine air is being supplied. However, in some instances, it is possible that turbine air can be supplied to the coater without bearing air. For example, a failure in the bearing air source or a break in the conduit which connects the bearing air source to the coater can occur. In these instances, if turbine air is supplied to the coater without bearing air, while the shaft will typically still rotate, the excessive wear will take place between the contacting surfaces of the air bearing sleeves and the shaft.

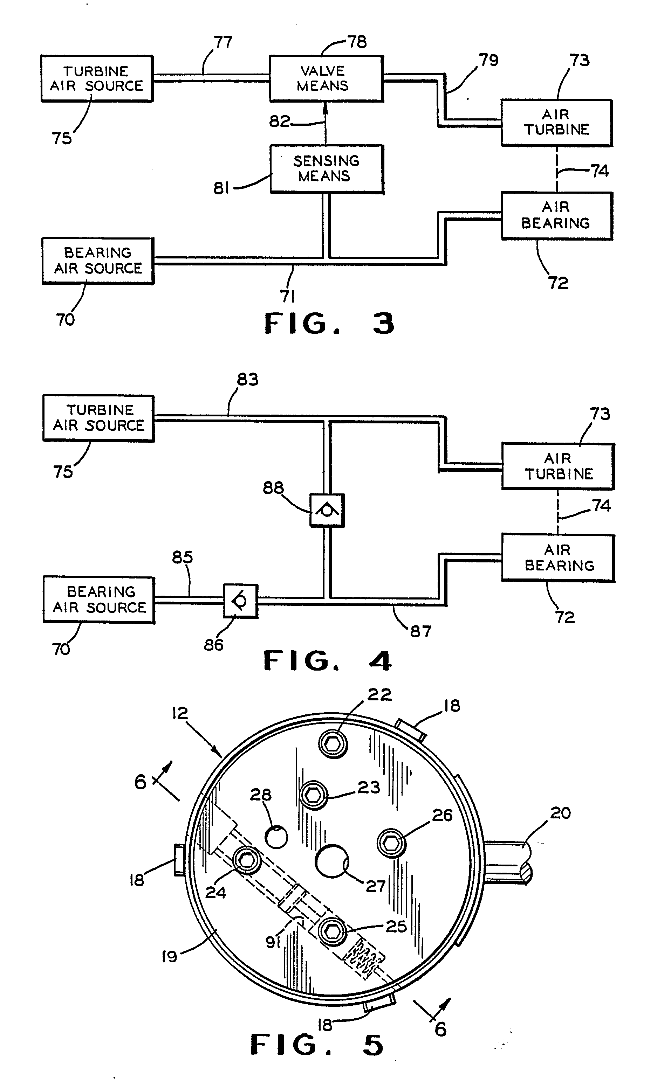

In order to ensure that pressurized air is being supplied to the air bearings whenever the air turbine is being driven, the present invention proposes the use of a protective system which, as described herein, includes at least two separate embodiments. These two embodiments are illustrated in block diagram form in Figs. 3 and 4. Briefly, in Fig. 3, the protective system is operative to block the supply of turbine air to the turbine when the pressure of the bearing air is below a predetermined amount. In Fig. 4, the protective system operates such that, in the event bearing air is not being supplied to the air bearings when the turbine air source is activated, a portion of the turbine air will be diverted to pressurize the air bearings.

Referring to Fig. 3, a bearing air source 70 is adapted to supply pressurized air in a conduit 71 to an air bearing 72 coupled to rotatably support an air turbine 73. The coupling between the bearing 72 and the air turbine 73 is represented by a dashed line 74. The air turbine 73 is connected to receive pressurized air from a turbine air source 75 through a conduit section 77, a normally closed valve means 78, and a conduit section 79. A sensing means 81 is connected to monitor the pressure in the conduit 71 and is adapted to generate a signal on a line 82 to open the valve means 78 when the pressure in the conduit 71 is above a predetermined amount. The signal on the line 82 can be an electrical signal which can be used to operate a solenoid -actuated valve means, or it can be a mechanical signal generated by the movement of a linkage arm, for example. Thus, as long as the bearing air pressure in the conduit 71 is above the predetermined amount, the valve means 78 is held open to enable operation of the air turbine. In the event turbine air is being supplied in the conduit 77, and the bearing air source is not operating or there is a break in the conduit 71 so that the pressure therein is below a predetermined amount, the valve means 78 will remain closed, and prevent the air from being supplied to the turbine in the conduit 79.

In the second embodiment shown in Fig. 4, the turbine air source 75 is connected directly to the air turbine by a line 83. The bearing air source 70 is connected to the air bearing 72 by means of a conduit section 85, a check valve 86, and a conduit section 87. Further, a check valve 88 is connected between the conduit 83 and the conduit section 87. The check valve 88 provides for air flow from the conduit 83 to the conduit 87 and to the air bearing 72 when the pressure in the conduit 87 is below the pressure in the conduit 83. Otherwise, the check valve 88 will prevent any fluid flow between the two conduits 83 and 87.

In the protective system of Fig. 4, if no bearing air is being supplied to the air bearings via the conduit sections 85 and 87, and pressurized air is being supplied to the air turbine by the conduit 83, a portion of the pressurized air in the conduit 83 flows through the check valve 88 and will be supplied to the air bearing 72 to rotatably support the shaft. While the pressure supplied to the air bearing via the turbine air source may not be as high as would normally be desirable, at least partial pressure to the air bearing will reduce the amount of shaft and bearing sleeve wear which would normally occur if no bearing air was present. The second check valve 86 is provided to prevent the turbine air from being exhausted through a leak which may have occurred in the conduit 85 or the bearing air source 70.

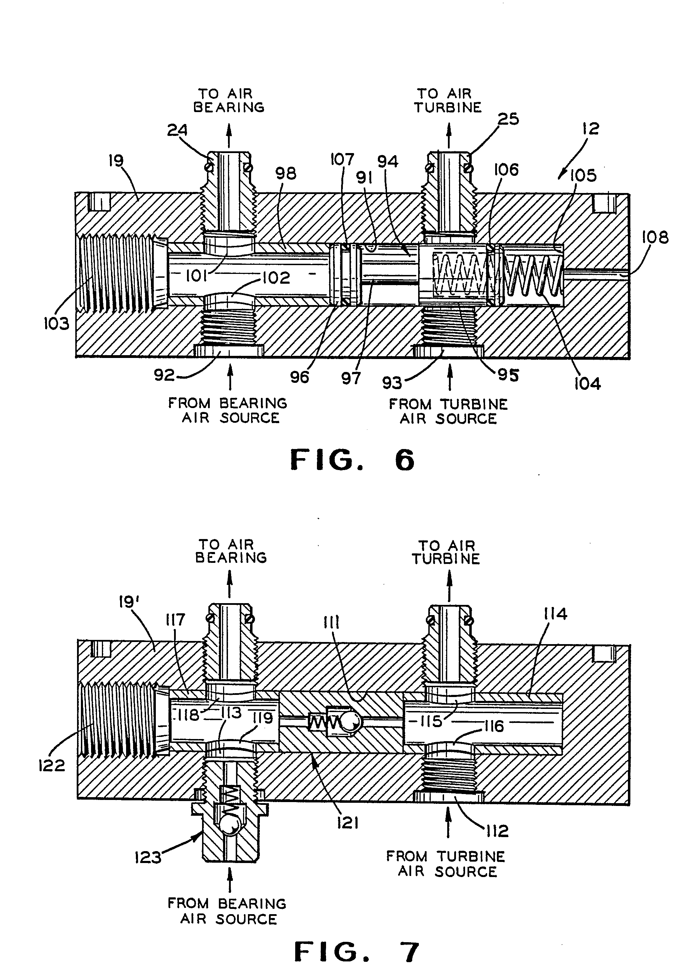

A preferred embodiment of the protective system illustrated in Fig. 3 is shown in Figs. 5 and 6. Preferably, the valve means 78 and the sensing means 81 of Fig. 3 are incorporated in the manifold assembly 12 in the manner as shown in Figs. 5 and 6. Referring to these figures, the manifold body 19 is provided with an aperture 91 which extends transversely through the manifold body and intersects axially extending apertures 92 and 93 for supplying the bearing air and turbine air to the air motor. These apertures are also shown in the perspective view of Fig. 1. As shown in Fig. 6, the bearing air fitting 24 is threaded into an outlet of the aperture 92, while the turbine air fitting 25 is threaded into the outlet of the aperture 93. A piston means 94 is slideably disposed within the aperture 91 and includes one end portion defining a cup shaped plug member 95 which normally blocks air flow through the aperture 93. The plug member 95 is connected to a piston member 96 by means of a stem portion 97. A sleeve 98 is frictionally held within the aperture 91 and is provided with aligned apertures 101 and 102 for allowing air to pass freely through the aperture 92. The one end of the aperture 91 is internally threaded and is adapted to receive a plug 103 having an end which abuts one end of the sleeve 98. A helical coil spring 104 has one end which is received within the cup shaped plug member 95, and an opposite end which abuts an end face 105 of the aperture 91.

Normally, the spring 104 urges the piston means 94 to the left as viewed in Fig. 6, such that the plug member 95 blocks the turbine air aperture 93 and the piston member 96 abuts the one end of the sleeve 98. The area in the aperture 93 to the left of the piston assembly is vented to the atmosphere by a passageway 108. An O-ring 106 surrounds the outer end of the plug 95 and blocks turbine air flow out of the passageway 108. Also, an O-ring 107 which surrounds the piston member 96 blocks any air flow between the turbine and bearing air passageways. In the embodiment illustrated in Figs. 5 and 6, the air turbine aperture 93 will normally be blocked by the plug member 95 unless the pressurized air being supplied to the air bearings exerts sufficient force on the piston member 96 to compress the spring 104 and move the piston assembly to the right, thereby allowing the air to flow through the aperture 93 past the stem 92 to the turbine. The spring 104 is selected such that a predetermined minimum bearing air pressure must be present before turbine air is supplied to the air motor.

There is shown in Fig. 7 in a preferred embodiment of a system which utilizes the check valve arrangement shown in Fig. 4. As shown in Fig. 7, an aperture 111, similar to the aperture 91 of Fig. 6, is formed transversely through the manifold body 19' to intersect the turbine and air bearing supply apertures 112 and 113. A first sleeve member 114 having aligned transverse apertures 115 and 116 is frictionally held in one end of the aperture such that the apertures 115 and 116 are aligned with the aperture 112. A second sleeve member 117 having aligned transverse apertures 118 and 119 is positioned in the opposite end of the aperture such that the apertures 118 and 119 are aligned with the bearing air aperture 113. A check valve assembly 121 is positioned between the two sleeve member 114 and 117 and is oriented to enable air to flow from the turbine aperture 112 to the bearing air aperture 113. The open end of the aperture is closed by the plug member 122. Further, a second check valve 123 is mounted at the inlet of the aperture 113 to prevent turbine air from being diverted toward the air bearing source.

It will be appreciated that, while the protective system of the present invention has been described specifically for use with an air motor including an air turbine assembly rotatably supported by air bearings, the invention is not limited to use with a system wherein the drive means is an air turbine assembly or other pneumatically driven device. For example, it may be desirable to prevent a non-pneumatic drive means from operating a rotating device which is supported by pneumatic bearings when there is no bearing air present. Thus, the present invention contemplates the use of a protective system for monitoring the pressure being supplied to an air bearing system, and for disabling an associated drive system in the event the pressure to the air bearings is below a predetermined amount.

It will be appreciated that other modifications to the above described system can be made without departing from the spirit or scope of the attached claims.

## Claims

1. A rotating device, comprising:
a pneumatically drivable shaft means rotatably supported by pneumatic bearings;
first conduit means for supplying pressurized air to said shaft means for rotatably driving said shaft means;
second conduit means for supplying pressurized air to said bearings for rotatably supporting said shaft means; and
protective means for monitoring the pressure in said second conduit means to ensure pressurized air is supplied to said pneumatic bearings whenever said shaft means is being rotatably driven.

2. The rotating device according to claim 1 wherein said protecting means includes sensing means responsive to pneumatic pressure in said second conduit means and valve means located in said first conduit means and responsive to said sensing means for blocking air flow in said first conduit means when said sensing means senses a pneumatic pressure less than a predetermined minimum pressure in said second conduit means.

3. The rotating device according to claim 1 wherein said protective means includes a third conduit means interconnecting said first conduit means and said second conduit means, and a first check valve means located in said third conduit means for allowing air flow from said first conduit means to said second conduit means when the pressure in said first conduit means is greater than the pressure in said second conduit means.

4. The rotating device according to claim 3 wherein said protective means further includes a second check valve means located in said second conduit for preventing air flow from said third conduit towards an inlet of said second conduit means.

5. The rotating device according to claim 1 wherein said protecting means includes a third conduit means interconnecting said first conduit means and said second conduit means, and a piston means disposed in said third conduit means, said piston means coupled to a plug means slideably disposed in said third conduit means and normally occluding said first conduit means, said piston means being responsive to pressure in said second conduit means to cause said plug means to be slideably moved to allow air flow through said first conduit means.

6. The rotating device according to claim 5 wherein said plug means is spring biased to normally occlude said first conduit means.

7. A coating applicator, comprising:
a rotary atomizer mounted on a pneumatically drivable shaft means, said shaft means rotatably supported by pneumatic bearings;
first conduit for supplying pressurized air to said shaft means for rotatably driving said shaft means;
second conduit for supplying pressurized air to said bearings for rotatably supporting said shaft means; and
protective means for monitoring the pressure in said second conduit means to ensure pressurized air is supplied to said pneumatic bearings whenever said shaft means is being rotatably driven.

8. The coating applicator according to claim 7 wherein said protective means includes sensing means responsive to pneumatic pressure in said second conduit and valve means located in said first conduit and responsive to said sensing means for blocking air flow in said first conduit when said sensing means senses a pneumatic pressure less than a predetermined minimum pressure in said second conduit.

9. The coating applicator according to claim 7 wherein said protective means includes a third conduit interconnecting said first conduit and said second conduit, and a first check valve means located in said third conduit for allowing air flow from said first conduit to said second conduit when the pressure in said first conduit is greater than the pressure in said second conduit.

10. The coating applicator according to claim 9, wherein said protective means further includes a second check valve means located in said second conduit for preventing air flow from said third conduit towards air inlet said second conduit.

11. The coating applicator according to claim 7, wherein said protective means includes a third conduit interconnecting said first conduit and said second conduit, and a piston means disposed in said third conduit, said piston means including a plug member slideably disposed in said third conduit and normally occluding said first conduit, said piston means being responsive to pressure in said second conduit to cause said plug means to be slideably moved to allow air flow through said first conduit.

12. The coating applicator according to claim 11 wherein said plug means is spring biased to normally occlude said first conduit.

13. A rotating device, comprising:

shaft means rotatably supported by pneumatic bearings;

drive means for rotating said shaft means;

conduit means for supplying pressurized air to said bearings for rotatably supporting said shaft means; and

protective means for monitoring the pressure in said conduit means for disabling said drive means unless a predetermined minimum pressure is being supplied to said pneumatic bearings.

0 286 292

FIG. 1

FIG. 2

## FIG. 3

TURBINE AIR SOURCE — 75

VALVE MEANS — 78

77

79

AIR TURBINE — 73

82

SENSING MEANS — 81

74

BEARING AIR SOURCE — 70

AIR BEARING — 72

71

## FIG. 4

TURBINE AIR SOURCE — 75

83

AIR TURBINE — 73

88

74

BEARING AIR SOURCE — 70

85

86

87

AIR BEARING — 72

## FIG. 5

12, 22, 18, 6, 28, 23, 26, 20, 27, 24, 25, 91, 19, 18, 18, 6

FIG. 6

FIG. 7